# EUROPEAN PATENT APPLICATION

(11) **EP 3 595 122 A1**
(43) Date of publication of application: **15.01.2020**
(21) Application number: 18195893.5
(22) Date of filing: 21.09.2018
(51) Int. Cl.: H02J 3/32, H02J 3/38, H02J 7/35

(54) **PHOTOVOLTAIC ENERGY STORAGE DEVICE AND INVERTER THEREOF**

(30) Priority: 10.07.2018 CN 201810749848
(71) Applicant: Shenzhen Hello Tech Energy Co., Ltd., Shenzhen City, Guangdong (CN)
(72) Inventor: CHEN, Junfeng, Shenzhen City, Guangdong (CN); CHU, Ting, Shenzhen City, Guangdong (CN); SUN, Zhongwei, Shenzhen City, Guangdong (CN)
(74) Representative: Viering, Jentschura & Partner mbB Patent- und Rechtsanwälte

(57) **Abstract**

An inverter includes a transformer configured to electrically connect an energy storage power source and generate induced ACs, first and second rectifier modules, first and second inverter modules, and first and second photovoltaic interfaces configured to receive DC from a photovoltaic module. The first and second rectifier modules are respectively electrically connected to the transformer and configured to convert the induced ACs into DCs. The first inverter module is electrically connected to the first rectifier module and the first photovoltaic interface for receiving the DC from the first rectifier module and the DC from the photovoltaic module, and converting the received DCs into an AC. The second inverter module is electrically connected to the second rectifier module and the second photovoltaic interface for receiving the DC from the second rectifier module and the DC from the photovoltaic module, and converting the received DC into AC. The inverter is capable of receiving DC output from the energy storage power source and DC output by the photovoltaic module and finally provides stable AC to the power-grid or load.

## Description

### TECHNICAL FIELD

The present invention relates to the field of photovoltaic technology, and in particular to inverter of photovoltaic energy storage device and photovoltaic energy storage device.

### BACKGROUND

Photovoltaic power generation is a process of converting solar energy into electrical energy, and the output power supplied by the photovoltaic power generation changes drastically because of environmental factors such as solar radiation intensity and temperature. Direct current (DC) output by the electric power is therefore unstable, and alternating current (AC) converted by an inverter is also unstable and would generate harmonics, which may cause the photovoltaic electric power connected to the power-grid to impact the power-grid or affect the normal operation of the AC load.

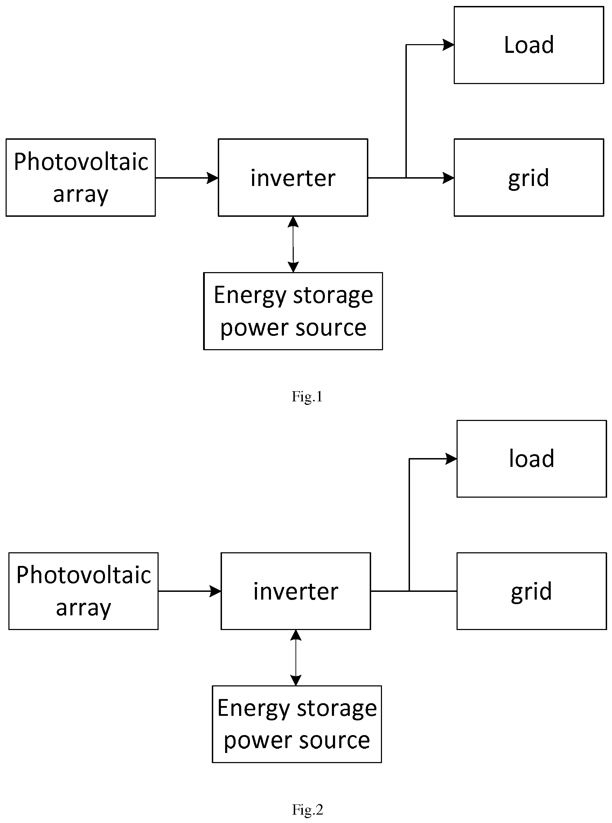

Therefore, prior art have adapted an energy storage power source in photovoltaic power generation system, as shown in Fig. 1, in order to make the output photovoltaic power change smoothly and improve the quality of the photovoltaic power.

Moreover, in order to promote the use of the renewable energy, the prior art have disclosed the regional power-grid composed of the renewable energy, energy storage system such as an energy storage power source and load, i.e. micro power-grid used as an independent unit, which can operate in parallel or in an off-grid state. Specifically, the energy storage system of the micro power grid acts as an energy buffering unit in the micro power-grid, which plays an important role in improving the control stability, improving the power quality of the micro power-grid, maintaining the power balance of the micro power-grid and improving the anti-interference ability of the micro power-grid. Moreover, the energy storage system of the micro power-grid can act as an emergency backup in case of power supply interruption. The structure of the micro power-grid based on photovoltaic power generation is shown in Fig. 2.

The above application scenarios all require cooperation of photovoltaic power generation and energy storage power source, and provide stable AC to the power-grid or the load by an inverter. However, how the energy storage power source supplies DC power to the inverter to achieve cooperation with the photovoltaic output DC power and finally the inverter provides stable AC power to the power-grid or load is still problem to be solved.

### SUMMARY

Thus, there is a desire for an improved inverter for a photovoltaic energy storage device which can finally provide stable AC to power-grid or load.

In one aspect, the present invention provides an inverter of photovoltaic power storage device which comprises a transformer configured for electrically connecting to an energy storage power source and generating an induced AC; a first rectifier module electrically connected to the transformer and configured to converted the induced AC into DC; first and second photovoltaic interfaces configured for electrically connecting a photovoltaic module and receiving DC therefrom; a first inverter module electrically connected to the first rectifier module and the first photovoltaic interface for receiving the DC from the rectifier module and the DC from the first photovoltaic module, and converting the received DC into AC; a second rectifier module electrically connected to the transformer and configured to converted the induced AC from the transformer into DC; and a second inverter module electrically connected to the second rectifier module and the second photovoltaic interface for receiving the DC from the second rectifier module and the DC from the second photovoltaic module, and converting the received DC into AC.

Preferably the transformer comprises a primary winding configured for electrically connecting the energy storage power source, a first secondary winding connected to the first rectifier module and a second secondary winding connected to the second rectifier module.

Preferably, the first inverter module comprises a first output terminal and a second output terminal, the second inverter module includes a third output terminal and a fourth output terminal; and the second output terminal is connected to the third output terminal, the first output terminal and the fourth output terminal all output AC.

Alternatively, the first inverter module comprises a first output terminal and a second output terminal, the second inverter module includes a third output terminal and a fourth output terminal; and the first output terminal is connected to the third terminal, the second output terminal is connected to the fourth output terminal, and the first output terminal and the second output terminal output AC.

Preferably, the first inverter module and the second inverter module are full bridge inverter circuit.

Preferably, the energy storage power source output DC, the inverter further includes an energy storage inverter module, the primary winding connects the energy storage power source through the energy storage inverter module.

Preferably, the energy storage inverter module includes half bridge inverter circuit.

Preferably, the first rectifier module includes half bridge rectifier circuit.

Preferably, the first rectifier module, the second rectifier module, the first inverter module and the second inverter module respectively include a control unit therein.

Preferably, the inverter further include a control module, the first rectifier module, the second rectifier module, the first inverter module and the second inverter module all are controlled by the control module.

In another aspect, the present invention provides a photovoltaic energy storage device which comprises an energy storage power source, an inverter electrically connected to the energy storage power source, and a photovoltaic module electrically connected to the inverter. The inverter comprises a transformer comprising a primary winding electrically connected to the energy storage power source, a first secondary winding configured for outputting a first induced AC and a second secondary winding configured for outputting a second induced AC; a first rectifier module electrically connected to the first secondary winding and configured to convert the first induced AC into a first DC; a first photovoltaic interface electrically connected to the photovoltaic module; a first inverter module electrically connected to the first rectifier module and the first photovoltaic interface for receiving the first DC from the first rectifier module and the DC from the first photovoltaic module, and converting the received DCs into an AC; a second rectifier module electrically connected to the second secondary winding and configured to convert the second induced AC into a second DC; a second photovoltaic interface electrically connected to the photovoltaic module; and a second inverter module electrically connected to the second rectifier module and the second photovoltaic interface for receiving the second DC from the second rectifier module and the DC from the photovoltaic module, and converting the received DCs into an AC.

Preferably, the photovoltaic module includes a photovoltaic panel and a power tracking control device, the photovoltaic panel is respectively electrically connected to the first photovoltaic interface and the second photovoltaic interface of the inverter by the power tracking control device.

Preferably, the inverter further comprises an energy storage inverter module, the energy storage power source outputs DC, and the transformer is electrically connected to the energy storage power source via the energy storage inverter module which is configured to convert the DC output from the energy storage power source to AC.

In preferred embodiment, output from the energy storage power source is converted into two ACs by the transformer, one of the AC combines with DC output by one of the photovoltaic panel after rectified by the first rectifier module, and then inverted by the first inverter module; the other AC combines with DC output by the other photovoltaic panel after rectified by the second rectifier module, and then inverted by the second inverter module. The first inverter module and the second inverter module can output separately, or in series, or in parallel, in order to output required AC to power-grid and load. That is, the inverter is capable of receiving DC from the energy storage power source and DC output by the photovoltaic module and finally provides stable AC to the power-grid or load.

### BRIEF DESCRIPTION OF THE DRAWINGS

FIG.1 illustrates an energy storage power source for smoothing photovoltaic power output of a photovoltaic power generation system.
FIG.2 illustrates another photovoltaic power generation system including an energy storage power source.
FIG.3 illustrates a photovoltaic energy storage device in accordance with one embodiment of the present invention.
FIG.4 illustrates a photovoltaic energy storage device in accordance with another embodiment of the present invention.
FIG.5 illustrates the two inverter modules output in series of the photovoltaic energy storage device of Fig.3.
FIG.6 illustrates the two inverter modules parallel output of the photovoltaic energy storage device of Fig.3.
FIG.7 illustrates the connection between the control module and switching transistors in accordance with an embodiment.

### Reference numerals of main components

| | |
|---|---|
| Inverter | 100 |
| Transformer | 110 |
| Primary winding | 111 |
| First secondary winding | 112 |
| Second secondary winding | 113 |
| First rectifier module | 120 |
| Second rectifier module | 130 |
| First inverter module | 140 |
| Second inverter module | 150 |
| Energy storage inverter module | 160 |
| First photovoltaic interface | 101 |
| Second photovoltaic interface | 102 |
| Photovoltaic module | 10 |
| Photovoltaic panel | 11 |
| Power tracking control device | 12 |
| Energy storage power source | 20 |

### DETAILED DESCRIPTION OF THE EMBODIMENTS

Below, embodiments of the present invention will be described in greater detail with reference to the drawings. It should be noted that the figures are illustrative rather than limiting. The figures are not drawn to scale, do not illustrate every aspect of the described embodiments, and do not limit the scope of the present disclosure. It should be noted that new embodiments may be formed by any combination between the embodiments or between the technical features describe below.

### The first embodiment

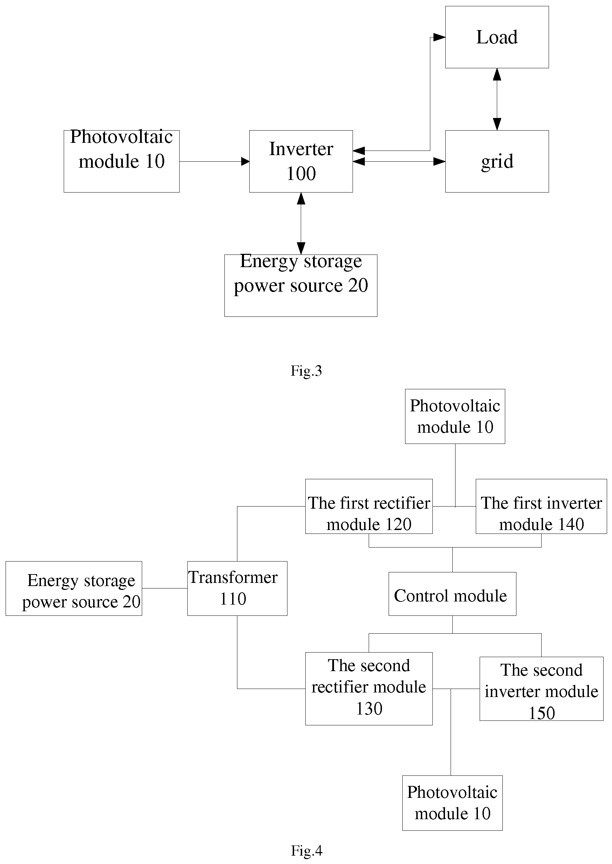

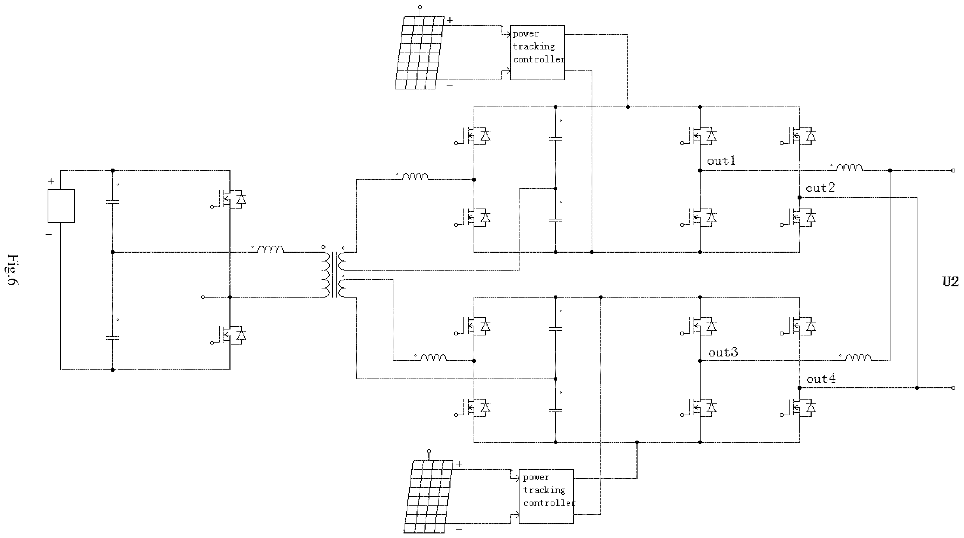

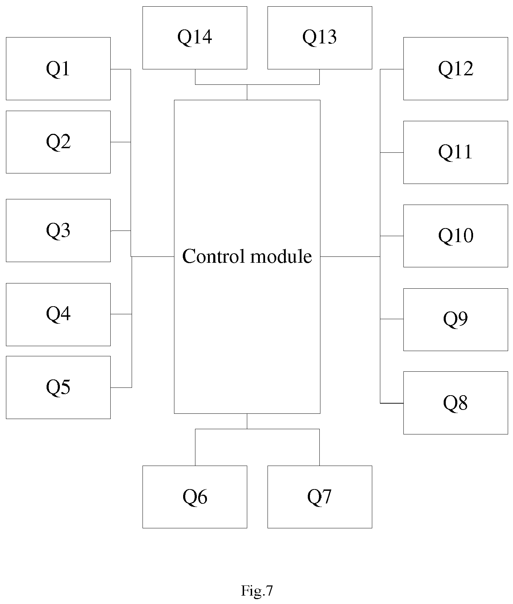

Figs.3-7 illustrates a photovoltaic power storage device in accordance with an embodiment. The photovoltaic power storage device includes an inverter 100 and a photovoltaic module 10. In this embodiment, the photovoltaic power storage device includes two photovoltaic modules 10, which also can be named a first photovoltaic modules and a second photovoltaic modules. In other embodiment, the photovoltaic power storage device includes one photovoltaic module 10.

Referring to Figs. 3-7, the inverter 100 includes a transformer 110, a first rectifier module 120, a second rectifier module 130, a first inverter module 140, a second inverter module 150, a first photovoltaic interface 101 and a second photovoltaic interface 102 respectively electrically connecting to the photovoltaic module 10 and receiving DC therefrom.

The transformer 110 includes a primary winding 111 configured to be electrically connected an energy storage power source 20, a first secondary winding 112 and a second secondary winding 113. The first secondary winding 112, the first rectifier module 120 and the first inverter module 140 sequentially electrically connect. The second secondary winding 113, the second rectifier module 130 and the second inverter module 150 sequentially electrically connect.

As a preferred embodiment, the photovoltaic module 10 includes a photovoltaic panel 11 or a photovoltaic array comprising a plurality of photovoltaic panels 11. The photovoltaic modules 10 respectively output DC voltage to the first photovoltaic interface 101 or the second photovoltaic 102.

As a preferred embodiment, the first photovoltaic interface 101 and the second photovoltaic interface 102 each includes a DC bus, and the photovoltaic module 10 electrically connects the DC bus.

As a preferred embodiment, referring to Fig.4, the photovoltaic module 10 further includes a power tracking controller 12, and the photovoltaic panel 11 is electrically connected to the first photovoltaic interface 101 and the second photovoltaic interface 102 by the power tracking controller 12.

The capability of the photovoltaic panel 11 can be expressed by voltage-current (U-I) curve. The instantaneous output power (U*I) of the output of the photovoltaic panel 11 moves along the U-I curve when the photovoltaic module 10 is affected by an external circuit. Therefore, the photovoltaic module 10 can always output the maximum power to maximize the use of solar energy for energy generation with a power tracking, especially a maximum power point tracking (MPPT). Specifically, the MPPT can be formed by power electronic elements cooperating with an appropriate software.

When the energy storage power source 20 outputs AC which flows through the primary winding 111, ACs can be induced in the first secondary winding 112 and the second secondary winding 113 respectively. The first induced AC generated by the first secondary winding 112 is converted into first DC by the first rectifier module 120 and output to the first photovoltaic interface 101, specifically to the DC bus of the first photovoltaic interface 101. The first inverter module 140 electrically connected to the first rectifier module and the first photovoltaic interface receives the first DC from the first rectifier module and the DC from the first photovoltaic module, and converting the received DCs into AC. The second induced AC generated by the second secondary winding 113 is converted into the second DC by the second rectifier module 130 and output to the second photovoltaic interface 102, specifically to the DC bus in the second photovoltaic interface 102. The second inverter module 150 electrically connected to the second rectifier module and the second photovoltaic interface receives the second DC from the second rectifier module and the DC from the second photovoltaic module, and converting the received DCs into AC.

As a preferred embodiment, the energy storage power source 20 outputs DC, the inverter 100 further includes an energy storage inverter module 160, and the primary winding 111 is electrically connected the energy storage power source 20 by the energy storage inverter module 160.

The DC output from the energy storage power source 20 can be inverted to AC by the energy storage inverter module 160 and be output to the primary winding 111.

As a preferred embodiment, the energy storage inverter module 160 converts the DC into AC with high frequency, for example AC of 10KHz, a transformer 110 with a high frequency is adapted accordingly, so that the overall size of the transformer 110 and the inverter 100 can be reduced, and the high-frequency AC is converted into the DC by the first rectifier module 120 and the second rectifier module 130 and the DC which is output to the first photovoltaic interface 101 and the second photovoltaic interface 102 is smoother, and its ripple is smaller. Thus, it is beneficial for the first inverter module 140, the second inverter module 150 to output high-quality AC. The transformer 110, the first rectifier module 120 and the second rectifier module 130 can realize the voltage isolation and high-frequency isolation between the energy storage power source 20 and the first photovoltaic interface 101, the energy storage power source 102 and the second photovoltaic interface 102. The photovoltaic power storage device and the inverter 100 have the advantages of electric isolation and light weight, which makes the system more efficient.

As a preferred embodiment, referring to Fig.4, the energy storage inverter module 160 includes a half bridge inverter circuit, which has a simple circuit with less components. In this embodiment, the half bridge inverter circuit includes switching transistors Q13, Q14 and capacitors C5, C6.

As a preferred embodiment, the first rectifier module 120 and the second rectifier module 130 respectively include a half bridge rectifier circuit which has a simple circuit with less components. In this embodiment, the half bridge rectifier circuit of the first rectifier module 120 includes switching transistors Q1, Q2 and capacitors C1, C2, and the half bridge rectifier circuit of the second rectifier module 130 includes switching transistors Q3, Q4 and capacitors C3, C4.

As a preferred embodiment, the energy storage inverter module 160, the first rectifier module 120 and the second rectifier module 130 all include a soft switching circuit, in order to reduce the switching loss and improve the efficiency, reliability of the inversion and the rectification.

As a preferred embodiment, the first inverter module 140 and the second inverter module 150 each includes a full bridge inverter circuit.

In this embodiment, the full bridge inverter circuit of the first inverter module 140 includes switching transistor Q5, Q6, Q9, Q10, the full bridge circuit of the second inverter module 150 includes switching transistor Q7, Q8, Q11, Q12.

As a preferred embodiment, the inverter 100 further includes control module (not shown), the energy storage inverter module 160, the first rectifier module 120, the second rectifier module 130, the first inverter module 140 and the second inverter module 150 all are controlled by the control module.

In the other embodiment, the energy storage inverter module 160, the first rectifier module 120, the second rectifier module 130, the first inverter module 140 and the second inverter 150 respectively include corresponding control units.

The control method of the energy storage inverter module 160, the first rectifier module 120, the second rectifier module 130, the first inverter module 140 and the second inverter module 150, such as a modulation strategy can be implemented by using the prior art, the details of which would not be described here.

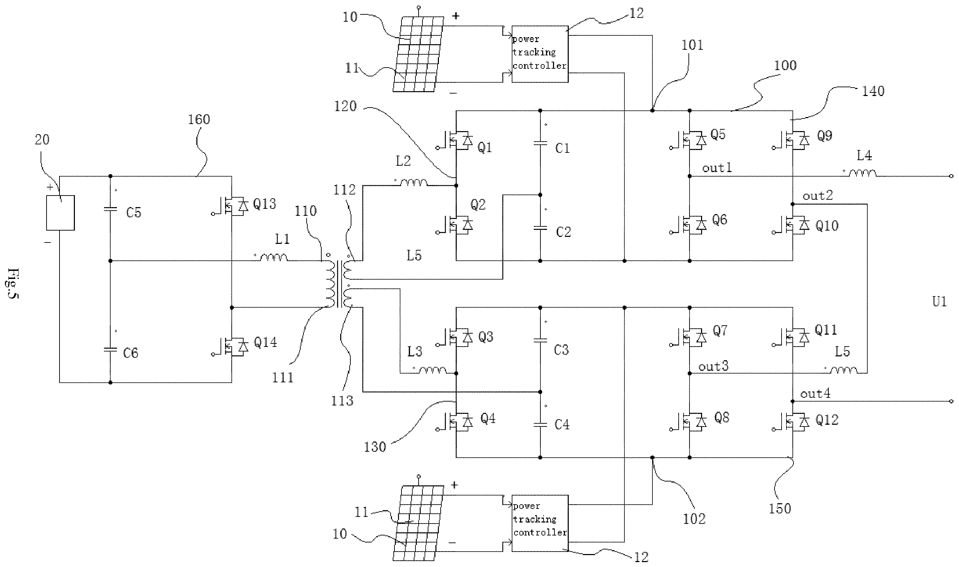

As a preferred embodiment, referring to the Fig.4 and Fig. 5, the first inverter module 140 includes a first output terminal (out1) and a second output terminal (out2), and the first output terminal (out1) and the second output terminal (out2) are respectively located on one of the bridge arms of the full bridge inverter circuit. The second inverter circuit include a third output terminal (out3) and a fourth output terminal (out4), and the third terminal (out3) and the fourth output terminal (out4) are respectively located on one of the bridge arms of the all bridge inverter circuit.

The first inverter module 140 and the second inverter module 150 output AC with 50 or 60 Hz. Alternatively, the first and second inverter modules 140/150 may output AC with other frequencies, so as to be matched to the grid and different load.

As a preferred embodiment, referring to Fig.4, the output terminals of the first inverter module 140 and the second inverter module 150 may be electrically connected in series. The second output terminal (out2) of the first inverter module 140 is electrically connected to the third output terminal (out3) of the second inverter module 150, the first output terminal (out1) of the first inverter module 140 and the fourth output terminal (out4) of the second inverter module 150 output AC U1, for example an AC of 240V.

As a preferred embodiment, referring to Fig.5, the output of the first inverter module 140 and the second inverter module 150 may be electrically connected in parallel. The first output terminal (out1) of the first inverter module 140 is electrically connected to the third output terminal (out3) of the second inverter module 150, the second output terminal (out2) of the first inverter module 140 is electrically connected to the fourth output terminal (out4) of the second inverter module 150, the first output terminal (out1) and the second output terminal (out2) output AC (U2), for example an AC of 120V.

The inverter 100 and the photovoltaic power storage device provided by the embodiments of the present invention transmits energy storage power source 20 into two AC by the transformer 110 with two secondary windings 112, 113, and one of the AC is rectified by the first rectifier module 120 and then combined with the DC output from one of the photovoltaic panels 11, and then inverted by the first inverter module 140, the other AC is rectified by the second rectifier module 130 and then combined with the AC output from the other photovoltaic panel 11, and then inverted by the second inverter module 130. The first inverter module 140 and the second inverter module 150 can output separately or in cascade, or in parallel, which makes it convenient to provide needed AC for the power-grid and the load. Thus, by the energy storage power source 20 providing DC power to the inverter 100, to achieve coordination with the DC output from the photovoltaic, the inverter 100 finally provides stable AC to the power-grid or load. Referring to Fig.3, when the photovoltaic power storage device fails, the power-grid can supply power to the load. The power-grid and/or the photovoltaic module 10 can supply power to the energy storage power source 20 via the inverter 100 when the energy storage power source 20 needs to be supplied.

Therefore, the technical solutions of embodiments of the present invention have been clearly and completely described above. Apparently, the described embodiments are merely part of, rather than all of, the embodiments of the present invention. A person skilled in the art may make various combinations of technical features in the various embodiments to meet practical needs. Based on the described embodiments of the present invention, any other embodiment obtained by a person skilled in the art without paying creative efforts shall also fall within the scope of the present invention.

## Claims

1. An inverter of a photovoltaic power storage device, comprising a transformer configured for electrically connecting to an energy storage power source and generating an induced AC, **characterized in that** the inverter further comprises:
a first rectifier module electrically connected to the transformer and configured to converted the induced AC into DC;
first and second photovoltaic interfaces configured for electrically connecting a photovoltaic module and receiving DC therefrom;
a first inverter module electrically connected to the first rectifier module and the first photovoltaic interface for receiving the DC from the rectifier module and the DC from the first photovoltaic module, and converting the received DC into AC;
a second rectifier module electrically connected to the transformer and configured to converted the induced AC from the transformer into DC; and
a second inverter module electrically connected to the second rectifier module and the second photovoltaic interface for receiving the DC from the second rectifier module and the DC from the second photovoltaic module, and converting the received DC into AC.

2. The inverter of claim 1, **characterized in that** a transformer comprises a primary winding configured for electrically connecting the energy storage power source, a first secondary winding connected to the first rectifier module and a second secondary winding connected to the second rectifier module.

3. The inverter of claim 1, **characterized in that** the first inverter module comprises a first output terminal and a second output terminal, the second inverter module comprises a third output terminal and a fourth output terminal; and
wherein the second output terminal is connected to the third output terminal, and the first output terminal and the fourth output terminal output AC.

4. The inverter of claim 1, **characterized in that** the first inverter module comprises a first output terminal and a second output terminal, the second inverter module comprises a third output terminal and a fourth output terminal; and
wherein the first output terminal is connected to the third terminal, the second output terminal is connected to the fourth output terminal, and the first output terminal and the second output terminal output AC.

5. The inverter of claim 3 or claim 4, **characterized in that** the first inverter module and the second inverter module are full bridge inverter circuit.

6. The inverter of claim 1, **characterized in that** the inverter further comprises an energy storage inverter module, and the primary winding connects the energy storage power source through the energy storage inverter module.

7. The inverter of claim 3 or claim 4, **characterized in that** the energy storage inverter module comprises half bridge inverter circuit.

8. The inverter of claim 1, **characterized in that** the first rectifier module comprises half bridge rectifier circuit.

9. The inverter of claim 1, **characterized in that** the first rectifier module, the second rectifier module, the first inverter module and the second inverter module respectively comprise corresponding control units.

10. The inverter of claim 1, **characterized in that** the inverter further comprises a control module, and the first rectifier module, the second rectifier module, the first inverter module and the second inverter module all are controlled by the control module.

11. A photovoltaic energy storage device, comprising an energy storage power source, a photovoltaic module, and an inverter of any one of claims 1-10.

12. The photovoltaic energy storage device of claim 11, **characterized in that** the photovoltaic module includes a photovoltaic panel and a power tracking control device, the photovoltaic panel is respectively electrically connected to the first photovoltaic interface and the second photovoltaic interface of the inverter by the power tracking control device.
